# EUROPEAN PATENT SPECIFICATION

(11) **EP 3 876 619 B1**
(45) Date of publication and mention of the grant of the patent: **15.10.2025**
(21) Application number: 18938326.8
(22) Date of filing: 01.11.2018
(51) Int. Cl.: H04L 5/00, H04B 7/06

(54) **RADIO NODE AND RADIO COMMUNICATION METHOD**
FUNKKNOTEN UND FUNKKOMMUNIKATIONSVERFAHREN
NOEUD RADIO ET PROCÉDÉ DE RADIOCOMMUNICATION

(43) Date of publication of application: 08.09.2021
(73) Proprietor: NTT DOCOMO, INC., Chiyoda-ku Tokyo 100-6150 (JP)
(72) Inventor: HARADA, Hiroki, Tokyo 100-6150 (JP); TAKEDA, Kazuaki, Tokyo 100-6150 (JP)
(74) Representative: Hoffmann Eitle
(86) International application number: PCT/JP2018/040769
(87) International publication number: WO 2020/090094

(56) References cited:
- EP-A1- 3 726 879
- WO-A1-2019/160331
- INTERDIGITAL INC: "Remaining Details On Synchronization Signal", vol. RAN WG1, no. Vancouver, Canada; 20180122 - 20180126, 13 January 2018 (2018-01-13), XP051384955, Retrieved from the Internet <URL:http://www.3gpp.org/ftp/tsg%5Fran/WG1%5FRL1/TSGR1%5FAH/NR%5FAH%5F1801/Docs/> [retrieved on 20180113]
- CHARTER COMMUNICATIONS: "Feature lead summary #1 of initial access and mobility", 10 October 2018 (2018-10-10), pages 1 - 10, XP051519208, Retrieved from the Internet <URL:http://www.3gpp.org/ftp/tsg%5Fran/WG1%5FRL1/TSGR1%5F94b/Docs/R1%2D1811885%2Ezip>
- "Discussion on enhancements to support NR backhaul links", 3GPP TSG-RAN WG1 #94BIS R1-1811359, 29 September 2018 (2018-09-29), XP051518762
- ERICSSON: "Updated summary of 7.2.3.1 Enhancements to support NR backhaul links", 3GPP TSG-RAN WG1 #94BIS R1-1811972, 11 October 2018 (2018-10-11), XP051519296
- CATT: "NR SS Periodicity", 3GPP TSG RAN WG1 ADHOC_NR_AH_L701 R1-1700180, 10 January 2017 (2017-01-10), XP051202685

## Description

### Technical Field

The present disclosure relates to a radio node and a radio communication method.

### Background Art

Long Term Evolution (LTE) has been specified for achieving a higher data rate, lower latency, and the like in a Universal Mobile Telecommunications System (UMTS) network. Successor systems of the LTE have also been studied for achieving a broader bandwidth and a higher speed based on the LTE. Examples of successor systems of the LTE include the systems called LTE-Advanced (LTE-A), Future Radio Access (FRA), 5th generation mobile communication system (5G), 5G plus (5G+), Radio Access Technology (New-RAT), and New Radio (NR).

Technologies of Integrated Access and Backhaul (IAB) integrating an access link and a backhaul link have been studied for the future radio communication system (for example, 5G) (NPL 1). In the IAB, a radio node such as an IAB node forms a user terminal (User Equipment (UE)) and a radio access link, and forms another IAB node and/or a radio base station, and a radio backhaul link.
NPL4 relates to a UE that may assume that antenna ports used for transmission of SS/PBCH (Synchronization Signal and Physical Broadcast Channel) blocks are quasi-collocated.

### Citation List

### Non-Patent Literature

NPL 1
   3GPP TR 22.804 V16.1.0, "Study on Communication for Automation Vertical Domains (Release 16)," September 2018
NPL 2
   3GPP TSG RAN Meeting #78 RP-172290, "Study on Integrated Access and Backhaul for NR," December 2017
NPL 3
   3GPP TSG RAN WGI Meeting #94b R1-1811256, "Enhancements to support NR backhaul links," October 2018
NPL 4
   INTERDIGITAL INC: "Remaining Details On Synchronization Signal", 3GPP DRAFT; R1-1800625, 3RD GENERATION PARTNERSHIP PROJECT (3GPP), MOBILE COMPETENCE CENTRE; 650, ROUTE DES LUCIOLES; F-06921 SOPHIA- ANTIPOLIS CEDEX ; FRANCE, vol. RAN WG1, no. Vancouver, Canada; 20180122 - 20180126 13 January 2018

### Summary of Invention

### Technical Problem

However, studies on signal measurement or connection between the radio nodes such as the IAB nodes are insufficient and further studies have been demanded.

An object of an aspect of the present disclosure is to provide a radio node and a radio communication method realizing more flexible signal measurement or connection between radio nodes.

### Solution to Problem

A radio node according to one aspect of the present disclosure is defined in independent claim 1.

### Advantageous Effects of Invention

According to the present disclosure, more flexible signal measurement or connection between the radio nodes can be realized.

### Brief Description of Drawings

FIG. 1 illustrates an exemplary configuration of a radio communication system according to an aspect of the present disclosure;
FIG. 2 illustrates an exemplary configuration of an IAB node according to the aspect of the present disclosure;
FIG. 3 illustrates an exemplary Synchronization Signal Block (SSB) transmission of Release (Rel)-15 according to the aspect of the present disclosure;
FIG. 4 illustrates a first example of the SSB transmission according to the aspect of the present disclosure;
FIG. 5 illustrates a second example of the SSB transmission according to the aspect of the present disclosure;
FIG. 6 illustrates a third example of the SSB transmission according to the aspect of the present disclosure; and
FIG. 7 illustrates an example of a hardware configuration of the IAB node and a user terminal according to the aspect of the present disclosure.

### Description of Embodiments

Hereinafter, an embodiment according to an aspect of the present disclosure will be described with reference to the accompanying drawings.

### <Radio Communication System>

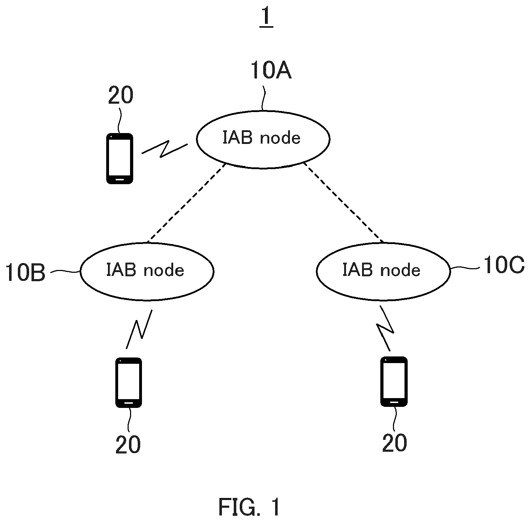

FIG. 1 illustrates an exemplary configuration of a radio communication system according to an embodiment.

Radio communication system 1 includes a plurality of IAB nodes 10A to 10C, and UEs 20 as an example of user terminals. It should be noted that, reference signs, as in "IAB nodes 10A to 10C" may be used for describing elements of the same kind while distinguishing them from each other, and only common numbers of the reference signs, as in " IAB nodes 10," may be used for describing elements of the same kind without distinguishing them from each other in the below-mentioned embodiment.

IAB nodes 10A to 10C are an example of radio nodes, and are connected to other IAB nodes 10 by radio communication. In a case of FIG. 1, IAB node 10B and IAB node 10C are connected to IAB node 10A. Hereinafter, in some cases IAB node 10A may be called "first IAB node" and IAB nodes 10B, 10C may be called "second IAB node".

IAB nodes 10A to 10C each form a cell as a radio communicable area. That is, IAB node 10 has a function of a base station. UE 20 in the cell can be radio-connected to IAB node 10 forming the cell.

It should be noted that, although not illustrated in FIG. 1, IAB node 10A may be connected to a core network (CN). In this case, IAB node 10A may be called an IAB donor. In FIG. 1, the number of IAB nodes 10 is three and the number of UEs 20 is three, but the number of IAB nodes 10 and the number of UEs 20 included in radio communication system 1 may be set to any number.

### <IAB node>

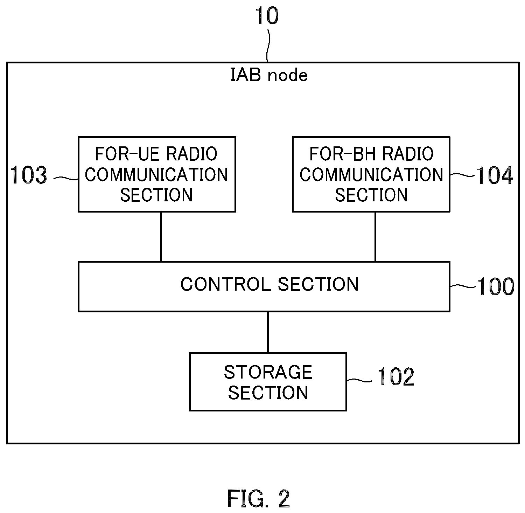

FIG. 2 illustrates an exemplary configuration of IAB node 10.

As illustrated in FIG. 2, IAB node 10 includes control section 100, storage section 102, for-UE radio communication section 103, and for-BH (backhaul) radio communication section 104.

For-UE radio communication section 103 executes processing of radio communication to UE 20.

For-BH radio communication section 104 executes processing of radio communication to other IAB nodes 10. That is, for-BH radio communication section 104 executes processing of radio backhaul communication.

Control section 100 controls radio communication of for-UE radio communication section 103. In addition, control section 100 controls radio communication of for-BH radio communication section 104. It should be noted that an operation of after-described IAB node 10 may be realized by the control of control section 100.

Storage section 102 stores therein various pieces of information that are used in the operation of control section 100.

### <Study>

Second IAB node 10 detects an SSB transmitted from first IAB node 10 and is connected to first IAB node 10, for example. "SSB" is an abbreviation of SS/PBCH Block. "SS" is an abbreviation of Synchronization Signal. "PBCH" is an abbreviation of Physical Broadcast Channel. The SSB to be used for connection of second IAB node 10 to first IAB node 10 may be at least one of next (A1) or (A2).

(A1) UE 20 reuses the same set as the SSB to be used for connection to first IAB node 10 for connection of second IAB node 10 to first IAB node 10.

(A2) UE 20 uses an SSB vertical to the SSB (by, for example, TDM and/or FDM) to be used for connection to first IAB node 10 for connection of second IAB node 10 to first IAB node 10. It should be noted that TDM is an abbreviation of Time Division Multiplexing and FDM is an abbreviation of Frequency Division Multiplexing.

In above-described (A1) and (A2), UE 20 based on Release (Rel)-15 as a conventional specification searches a predetermined frequency at the initial access to detect the SSB. The frequency that is searched by UE 20 at the initial access in this way is called sync-raster. The SSB to be arranged on the sync-raster is called a sync-raster SSB. On the other hand, the frequency that is not searched by UE 20 based on Rel-15 at the initial access is called off sync-raster. The SSB to be arranged on the off sync-raster is called an off sync-raster SSB.

UE 20 based on Rel-15 does not search for the off sync-raster SSB without instructions from the base station, at the time including the initial access time. Therefore, with respect to the off sync-raster SSB, a mapping pattern of SSB in a periodicity and/or in a time domain not supported by Rel-15 can be studied for IAB node 10.

For example, constraints of next (B1) and (B2) with respect to the SSB are present in Rel-15.

(B1) The number of transmittable SSBs in a half frame (5 ms) is 64 pieces at the maximum.

(B2) An SSB index is applied to the SSB depending upon a time position in the half frame. In addition, in the half frame and a half frame different therefrom, UE 20 assumes a spatial QCL (that is, the same beam) with respect to SSBs to which the same index is applied. The QCL is an abbreviation of Quasi Co-Location.

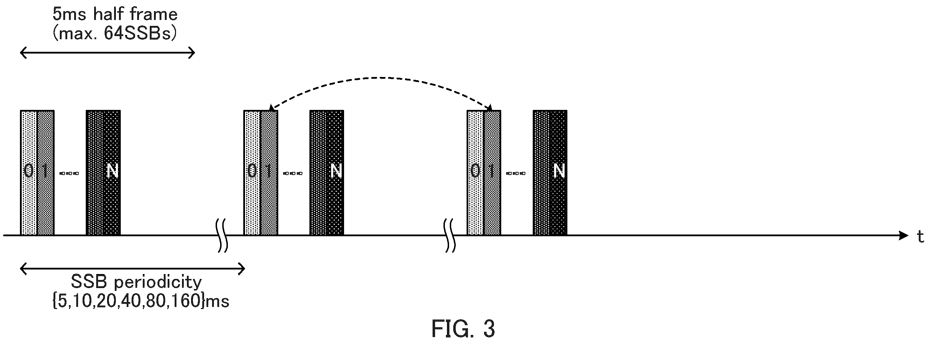

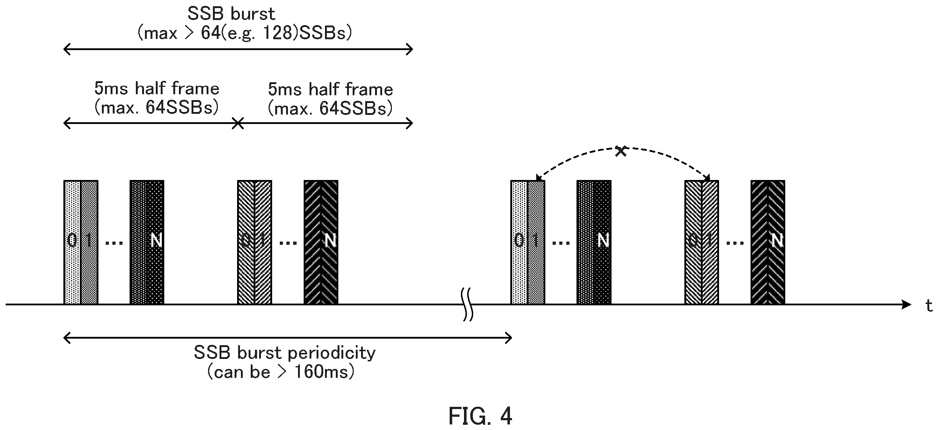

The above (B2) will be described with reference to FIG. 3. In FIG. 3, SSBs to which the same beam forming is applied are expressed in the same hatching. The expression by the hatching is made in the same way in FIG. 4, FIG. 5 and FIG. 6. In Rel-15, 64 pieces of SSBs at the maximum can be arranged in the half frame (5 ms). A group of the SSBs in the half frame is transmitted in a predetermined SSB periodicity. The SSB periodicity is any of 5 ms, 10 ms, 20 ms, 40 ms, 80 ms and 160 ms. In Rel-15, for example, as illustrated in FIG. 3, UE 20 assumes SSB #n (n is the integral number of 1 to N) in the first half frame and SSB #n in the second half frame as the same beam forming. It should be noted that "SSB #n" indicates an SSB of an SSB index n.

That is, by the constraints of the above (B1) and (B2), it is not supported to apply more different transmission beam forming than 64 pieces to each SSB for transmission in Rel-15. It is also considered to apply more different transmission beam forming than 64 pieces to each SSB by using CSI-RS. However, in a case where UE 20 cannot in advance acquire the configuration, for example, at the initial access, the CSI-RS cannot be used. It should be noted that "CSI" is an abbreviation of Channel State Information, and "RS" is an abbreviation of Reference Signal.

Meanwhile, with respect to IAB node 10, at least one need of next (C1) to (C3) is considered.

(C1) In IAB node 10 for radio backhaul communication, the antenna element number is increased to make the beam thin (sharp) and extend a communication distance.

(C2) In IAB node 10, an optimal beam for radio backhaul communication is selected out of multiple (more than 64 pieces) beam patterns.

(C3) IAB node 10 realizes the above (C1) and/or (C2) even in a case where the configuration cannot be in advance acquired at the initial access, for example.

In the present embodiment, IAB node 10 that satisfies at least one of the above (C1) to (C3) and the radio communication method will be described. That is, IAB node 10 and the radio communication method according to the present embodiment satisfy at least one of (D1) to (D3) hereinafter.

(D1) IAB node 10 supports multiple (for example, more than 64 pieces) beam patterns.

(D2) SSB to be transmitted for initial access of IAB node 10 is reused also for discovery and/or measurement of IAB node 10.

(D3) Transmission periodicity of SSB can be made long in such a manner as to be capable of constraining power consumption of IAB node 10.

IAB node 10 and the radio communication method according to the present embodiment support at least one of method 1, method 2, method 3 and method 4, which will be described later, with respect to the off sync-raster SSB for satisfying at least one of the above (D1) to (D3).

### <Method 1>

First IAB node 10 notifies or broadcasts whether to assume the QCL with respect to the SSBs to which the same SSB index is applied, in the half frames (5 ms) different from each other. Whether to assume the QCL may be implicitly notified or broadcasted, or may be explicitly notified or broadcasted. Next, Example 1A, Example 1B and Example 1C with respect to method 1 will be described.

### <<Example 1A>>

In a case where the transmission of the SSBs more than 64 pieces is notified by a bitmap in which ssb-PositionsInBurst parameters are expanded, in the configuration of a serving cell or IAB node 10, such as servingCellConfigCommon parameters, second IAB node 10 operates as follows. Alternatively, in the configuration where the SSB index starts from "0", in a case where the transmission of the SSBs equal to or after the SSB index "64" is notified, second IAB node 10 operates as follows. That is, second IAB node 10 assumes that the SSB is transmitted in each of both the half frames (5 ms) in one radio frame (10 ms). Second IAB node 10 does not assume the QCL in SBBs to which the same SSB index is applied and transmitted in each of the half frames different from each other.

Alternatively, first IAB node 10 may explicitly instruct whether to assume the QCL in SBBs to which the same SSB index is applied and transmitted in each of the half frames different from each other to second IAB node 10 by one independent bit. The instruction may be made in such a manner that in a case where the one bit is "1", the QCL is not assumed and in a case where the one bit is "0", the QCL is assumed. Alternatively, on the contrary, the instruction may be made in such a manner that in a case where the one bit is "1", the QCL is assumed and in a case where the one bit is "0", the QCL is not assumed.

Example 1A will be described with reference to FIG. 4. First IAB node 10 locates the SSB in each of the former and latter (that is, both) half frames (5 ms) in one radio frame (10 ms), for example. The maximum number of the SSBs that can be arranged in each half frame may be 64 pieces. As a result, first IAB node 10 can transmit the 128 pieces of the SSBs at the maximum in an SSB burst corresponding to one radio frame in FIG. 4.

Second IAB node 10, as illustrated in FIG. 4, does not assume the QCL between SSB #n of the former half frame and SSB #n of the latter half frame in a case where the SSBs more than 64 pieces are detected in the SSB burst. Alternatively, second IAB node 10 does not assume the QCL between SSB #n of the former half frame and SSB #n of the latter half frame in a case where the transmission of the SSB of SSB #64 and after that is detected in the SSB burst. Therefore, the beam forming different from each other can be applied to each of the SSBs in the SSB burst. That is, first and second IAB nodes 10 can use the beam patterns more than 64 pieces.

In addition, the periodicity of the SSB burst may be configured to be longer than 160 ms. By the configuration, the power consumption of IAB node 10 can be suppressed.

### <<Example 1B>>

First IAB node 10 uses bits in the PBCH of the off sync-raster SSB and notifies whether to apply the bean forming different from each other in the SSB in each of the former and latter (that is, both) half frames (5 ms) in the one radio frame (10 ms). The bit in the PBCH used in this notification may be a bit of a ssb-subcarrier Offset (that is, k_SSB) parameter or a pdcch-ConfigSIBI parameter. That is, in a case of the off sync-raster SSB, a bit of a predetermined parameter in the PBCH may be used for an object different from a case of the sync-raster SSB.

### <<Example 1C>>

In a case where a period (for example, an SMTC parameter) of a measurement window longer than 5 ms is configured in the configuration for measurement, such as a MeasObjectNR parameter, second IAB node 10 is located in time positions different form each other in the measurement window and does not assume the QCL to the SSBs to which the same SSB index is applied. It should be noted that "SMTC" is an abbreviation of SSB based RRM measurement timing configuration. "RRM" is an abbreviation of Radio Resource Management.

Alternatively, first IAB node 10 may explicitly instruct whether to assume the QCL in the SBBs to which the same SSB index is applied, to second IAB node 10 by one independent bit.

Alternatively, second IAB node 10 may not assume the QCL in the SBBs to which the same SSB index is applied in a case where the transmission of the SSBs more than 64 pieces is notified by the bitmap indicating the SSB index of a measurement target. Or second IAB node 10 may not assume the QCL in the SBBs to which the same SSB index is applied in a case where the transmission of the SSBs equal to or after the SSB index "64" is notified in the configuration where the SSB index starts from "0".

### <Method 2>

In a period of the measurement window for performing the measurement by using the SSB for discovery and/or measurement of the IAB node, the period longer than 5 ms of the longest supported by Rel-15 is supported. In a periodicity of the measurement window, the periodicity longer than 160 ms of the longest supported by Rel-15 is supported. For example, in method 2, at least one of next Example 2A and Example 2B is supported.

### <<Example 2A>>

In a case where a period (for example, an SMTC parameter) of a measurement window with respect to the configuration for measurement, such as a MeasObjectNR, a period longer than 5 ms is supported. In the periodicity (for example, periodicityAndOffset parameter) of the measurement window, the periodicity longer than 160 ms is supported.

### <<Example 2B>>

For an operation such as Radio Link Monitoring (RLM), in a parameter of a transmission pattern of SSB (for example, an ssb-PositionsInBurst parameter) in the configuration of the serving cell or IAB node 10, such as a ServingCell ConfigCommon parameter, the instruction by the bitmap having the bit number more than 64 pieces is supported. In addition, in a parameter of the transmission periodicity of the SSB (for example, an ssb-periodicityServingCell parameter), the periodicity longer than 160 ms is supported.

It should be noted that first IAB node 10 may include at least any of the configuration for the measurement and the configuration for SSB transmission of the serving cell to broadcast information (for example, SIB) for transmission. The broadcast information can be used as information for IAB node in the periphery to perform detection and measurement. For example, second IAB node 10 may perform the detection or measurement of first IAB node 10 by using the broadcast information. It should be noted that "SIB" is an abbreviation of System Information Block.

### <Method 3>

In the measurement of the off sync-raster SSB, a broad band measurement of 20 PRB or more width (that is, equal to or more than a predetermined frequency bandwidth) is supported. Measurement precision in one time of measurement can be enhanced by supporting the broad band measurement. It should be noted that "PRB" is an abbreviation of Physical Resource Block. For example, in method 3, at least one of next Example 3A and Example 3B is supported.

### <<Example 3A>>

FDM of the CSI-RS is made to the off sync-raster SSB, and in a case where it is explicitly instructed to support the broad band measurement equal to or more than 20 PRB width in the configuration for measurement, in the configuration of a serving cell or in the PBCH, second IAB node 10 is operated as follows. That is, second IAB node 10 assumes the QCL with respect to CSI-RS of the same symbol as that of the SSB and uses SSB RE and CSI-RS RE to derive RSRP or SINR for RRM, RLM or BFD, for example. It should be noted that "RE" is an abbreviation of Resource Element. "RSRP" is an abbreviation of Reference Signal Received Power. "SINR" is an abbreviation of Signal-to-Interference plus Noise power Ratio. "BFD" is an abbreviation of Beam Failure Detection.

### <<Example 3B>>

In the off sync-raster, the SSB is repeatedly arranged in the frequency direction, and in a case where it is explicitly instructed to support the broad band measurement equal to or more than 20 PRB width in the configuration for measurement, in the configuration of the serving cell or in the PBCH, second IAB node 10 is operated as follows. That is, second IAB node 10 uses RE of the SSBs repeatedly arranged in the frequency direction to derive the RSRP or SINR.

The repeat number of the SSB in the off sync-raster as described above may be defined by one only (for example, the repeat number is "3") depending upon a specification. Or, candidates of a plurality of the repeat numbers (for example, the candidates "3", "5" of the repeat numbers) are defined depending upon a specification, and one of the candidates may be explicitly instructed.

It should be noted that in a case where any of Example 3A or Example 3B as described above is used for measurement in the off sync-raster, since the measurement precision in one-time measurement is high as described above, the SSB sample number less than the SSB sample number defined in Rel-15 may be assumed in the requirement of measurement delay. For example, in Rel-15, the sample number of five is assumed for Intra-band RRM (for example, refer to Rel-15 TS38.133 Section 9.2.5.2). On the other hand, in a case of performing the measurement using any of Example 3A or Example 3B as described above, the sample number less than the sample number of five may be assumed.

### <Method 4>

First IAB node 10 changes the beam for each periodicity of an SSB burst periodicity and/or an SMTC periodicity for transmission, and notifies or broadcasts whether to assume the QCL in the SSBs to which the same SSB index is applied. Whether to assume the QCL may be implicitly or explicitly notified or broadcasted. For example, first IAB node 10 transmits SSB to which the beam forming #0 to #63 is applied for each even-numbered periodicity and transmits SSB to which the beam forming #64 to #127 is applied for each odd-numbered periodicity. Next, Example 4A, Example 4B and Example 4C will be described with respect to method 4.

### <<Example 4A>>

In a case where the transmission of the SSBs more than 64 pieces is notified by the bitmap in which the ssb-PositionsInBurst parameter is expanded in the configuration of the serving cell or IAB node 10, such as the servingCellConfigCommon parameter (in a case of being implicitly notified), second IAB node 10 is operated as follows. That is, second IAB node 10 assumes that the beam forming changes for each periodicity and does not assume the QCL in the SSBs to which the same SSB index is applied. Alternatively, second IAB node 10 assumes that the beam forming changes for each periodicity in a case where the transmission of SSB equal to or after SSB index "64" is notified in the configuration where the SSB index starts from "0" and may not assume the QCL in the SSBs to which the same SSB index is applied.

In the configuration where the transmission of the SSBs more than 64 pieces is notified by the bitmap or in the configuration where the SSB index starts from "0", in a case where the transmission of SSB after the SSB index "64" is notified and the instruction indicating that the beam forming changes for each periodicity is notified (that is, in a case of being explicitly notified), second IAB node 10 is operated as follows. That is, second IAB node 10 assumes that the beam forming changes for each periodicity and does not assume the QCL in the SSBs to which the same SSB index is applied.

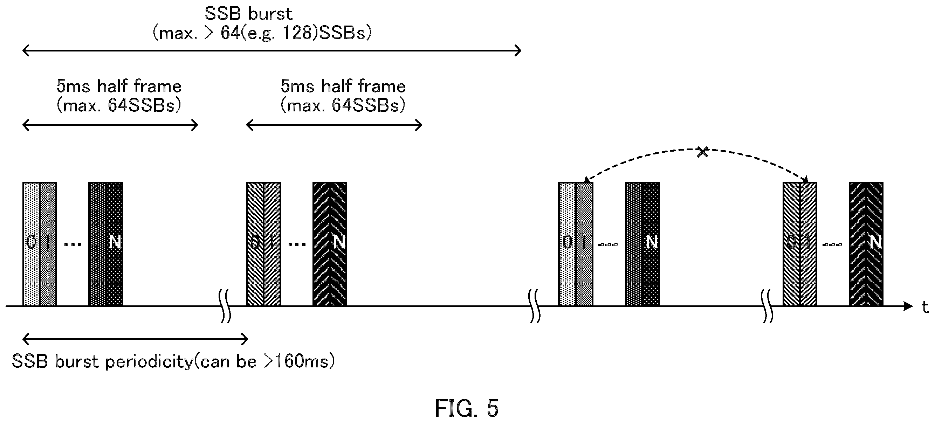

Example 4A will be described with reference to FIG. 5. FIG. 5 differs in a point where the half frames including SSBs are not continuous from FIG. 4. First IAB node 10, for example, transmits SSBs of 64 pieces at the maximum in each of the first and second half frames including SSBs in the SSB burst. First IAB node 10 notifies the SSB transmission in the SSB burst by the bitmap. Second IAB node 10 does not assume the QCL between SSB #n of the first half frame and SSB #n of the second half frame, for example, in a case where the transmission of SSBs more than 64 pieces is notified by the bitmap.

It should be noted that, as illustrated in FIG. 5, first IAB node 10 may notify a period between the first half frame and the second half frame as SSB burst periodicity. In a case where second IAB node 10 determines not to assume the QCL by the bitmap, twice the SSB burst periodicity notified from first IAB node 10 may be assumed as a period of the SSB burst.

### <<Example 4B>>

First IAB node 10 uses the bit in the PBCH of the off sync-raster SSB to notify whether or not the QCL assumption changes for each periodicity. The bit in the PBCH used in this notification may be a bit of the ssb-subcarrierOffset (that is, k_SSB) parameter or pdcch-ConfigSIBI parameter, for example.

### <<Example 4C>>

In a case where the transmission of the SSBs in the measurement target SSB index more than 64 pieces is notified by the bitmap in the configuration for measurement, such as the MeasObjectNR parameter or in a case where the measurement of SSBs equal to or after the SSB index "64" is notified (in a case of being implicitly notified) in the configuration where the measurement target SSB index starts from "0", second IAB node 10 is operated as follows. That is, second IAB node 10 assumes that the beam changes for each periodicity and does not assume the QCL in the SSBs to which the same SSB index is applied.

In the configuration where the transmission of SSBs of the measurement target SSB index more than 64 pieces is notified by the bitmap or in the configuration where the measurement target SSB index starts from "0", in a case where the measurement of SSBs equal to or after the SSB index "64" is notified and the instruction indicating that the beam forming changes for each periodicity is notified (that is, in a case of being explicitly notified), second IAB node 10 is operated as follows. That is, second IAB node 10 assumes that the beam forming changes for each periodicity and does not assume the QCL in the SSBs to which the same SSB index is applied.

### <Modification>

### <<Modification 1>>

IAB node 10 may notify sweeping in the SSB beam more than 64 pieces of UE 20 based on Rel-16, for example. In a case where UE 20 based on Rel-16 receives the notification, rate matching at the receiving of PDSCH (Physical Downlink Shared Channel) may be performed to SSBs more than 64 pieces. In addition, in a case where UE 20 based on Rel-16 receives the notification, an RRM measurement operation may be performed to SSBs more than 64 pieces as a target.

In this case, IAB node 10 is required to cause UE 20 based on Rel-15 to perform only measurement to the SSB beam of 64 pieces as the maximum beam forming number. In addition, IAB node 10 may cause UE 20 based on Rel-15 to perform measurement of SSB beams to 64 pieces based on a first measurement instruction, and may cause UE 20 based on Rel-15 to perform measurement of the remaining SSB beams based on a second measurement instruction.

### <<Modification 2>>

The periodicity (SSB group periodicity) of the half frame (5 ms) including the SSB and the SSB burst periodicity in the SSB burst may be independently configured. For example, first IAB node 10 may notify or broadcast the SSB group periodicity and the SSB burst periodicity individually to UE 20.

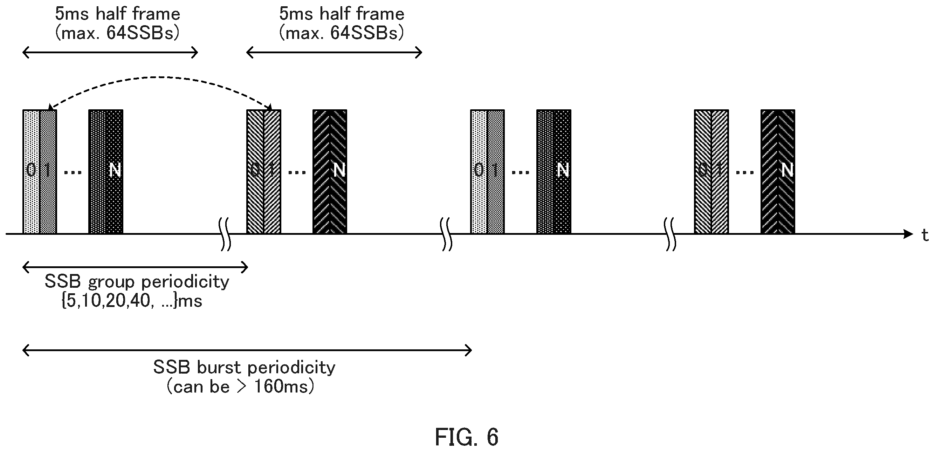

Modification 2 will be described with reference to FIG. 6. First IAB node 10 transmits SSBs of 64 pieces at the maximum in each of the first and second half frames including SSBs, in the SSB burst, for example. In this case, a period between the first half frame and the second half frame corresponds to the SSB group periodicity. In addition, a period between the first SSB burst and the second SSB burst corresponds to the SSB burst periodicity. The SSB group periodicity may be selected out of candidates in advance defined, such as 5 ms, 10 ms, 20 ms and 40 ms. The SSB burst periodicity may be periodicity longer than 160 ms.

It should be noted that FIG. 4 can be said as an example where the SSB group periodicity is fixed to 5 ms, and FIG. 5 can be said as an example where the SSB group periodicity is fixed to 1/2 times the SSB burst periodicity. The SSB group periodicity and the SSB burst periodicity are not limited to fixation, and may be variable.

### <Note>

In the present embodiment, the maximum number of SSBs included in the half frame is not limited to 64 pieces, but may be more than or less than 64 pieces. In the present embodiment, the maximum number of SSBs included in the SSB burst is not limited to 128 pieces, but may be more than or less than 128 pieces. The number of the half frames including SSBs included in the SSB burst may be more than two.

In addition, the maximum number of SSBs included in the SSB burst may differ for each periodicity of the SSB burst. For example, IAB node 10 may switch the maximum numbers "128 pieces" and "256 pieces" of SSBs included in the SSB burst for each periodicity of the SSB burst in accordance with a communication environment, for example. Therefore, it is possible to control the tradeoff between extension of the SSB burst periodicity and an improvement of flexibility of the SSB beam following an increase in the maximum number of the SSBs.

### <Summary of Present Disclosure>

According to IAB node 10 or the radio communication method, the SSBs can be arranged more flexibly than the sync-raster in the off sync-raster. For example, the beam forming of the patterns more than the sync-raster (that is, many directivity patterns) can be applied to the SSBs in the off sync-raster.

For example, first IAB node 10 can apply the beam reaching more sharply and farther than the sync-raster to the SSB in the off sync-raster. In addition, first IAB node 10 can apply the beam more appropriate in the direction of second IAB node 10 than the sync-raster to the SSB in the off sync-raster. In addition, first IAB node 10 can transmit the SSB burst in the periodicity longer than the sync-raster in the off sync-raster. First IAB node 10 can use the bandwidth (many PRB number) broader than the sync-raster to the transmission of the SSB in the off sync-raster. That is, second IAB node 10 can measure the SSB in the bandwidth broader than the sync-raster in the off sync-raster.

As described above, the present disclosure is described.

### <Hardware Configuration and the like>

It should be noted that the block diagram used in the description of the embodiment illustrates the block in a functional unit. The functional blocks (configuration sections) are realized by any combination of at least one of hardware and software. A realizing method of each of the functional blocks is not particularly limited. That is, each of the functional blocks may be realized by using one apparatus in which the functional blocks are connected physically or logically or may be realized by a plurality of apparatuses configured by directly or indirectly (for example, wiredly or radio) connecting two or more of apparatuses separated physically or logically. The functional blocks may be realized by combining software to the one apparatus or the plurality of apparatuses.

The function includes judging, deciding, determining, computing, calculating, processing, deriving, investigating, searching, confirming, receiving, transmitting, outputting, accessing, resolving, choosing, selecting, establishing, comparing, assuming, expecting, regarding, broadcasting, notifying, communicating, forwarding, configuring, reconfiguring, allocating, mapping, and assigning, but is not limited thereto. For example, the functional block (configuring section) functioning the transmission is called a transmission section or a transmitter. The realizing method of any of them, as described above, is also not limited particularly.

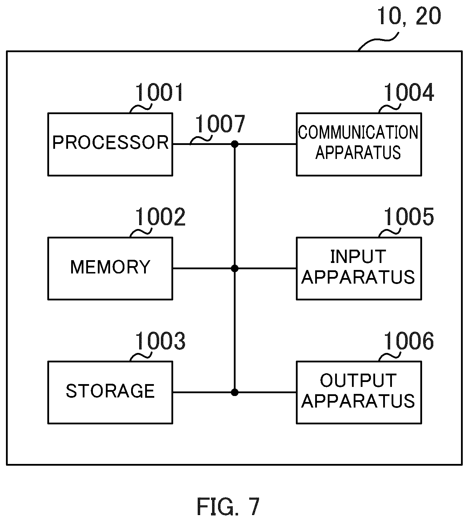

For example, the IAB node, the user terminal and the like according to an embodiment in the present disclosure may function as a computer configured to perform the processing of the radio communication method of the present disclosure. FIG. 7 illustrates an example of the hardware configuration of the IAB node and the user terminal according to the embodiment in the present disclosure. IAB node 10 and user terminal 20 described above may be configured as a computer apparatus to physically include processor 1001, memory 1002, storage 1003, communication apparatus 1004, input apparatus 1005, output apparatus 1006, and bus 1007.

In the following description, the word of "apparatus" may be replaced with circuit, device, unit or the like. The hardware configuration of IAB node 10 and user terminal 20 may be configured to include one apparatus or a plurality of the apparatuses illustrated in the figures or may be configured without including part of the apparatuses.

Each of the functions of IAB node 10 and user terminal 20 can be realized by causing hardware of processor 1001, memory 1002 or the like to read in specified software (program) to operate processor 1001, and control communication by communication apparatus 1004, or control at least one of readout and writing of data in memory 1002 and storage 1003.

Processor 1001 causes, for example, an operating system to operate and control an entire computer. Processor 1001 may be configured by an interface with the peripheral equipment, a control apparatus, an operational apparatus, and a Central Processing Unit (CPU) including a register. For example, control section 100 and the like described above may be realized by processor 1001.

Processor 1001 reads out programs (program codes), a software module, data and the like to memory 1002 from at least one of storage 1003 and communication apparatus 1004 and executes various kinds of processing according to them. The program causes the computer to perform at least part of the operation described in the embodiment. For example, control section 100 of IAB node 10 may be stored in memory 1002, and may be realized by a control program operated in processor 1001, and the other functional blocks also may be realized in the similar manner. The effect that the various kinds of processing are executed by single processor 1001 is described, but they may be executed by two or more of processors 1001 simultaneously or sequentially. Processor 1001 may be implemented by one or more of chips. The program may be transmitted through an electrical communication line from a network.

Memory 1002 is a computer readable record medium, and for example, may be configured by at least one of a ROM (Read Only Memory), an EPROM (Erasable Programmable ROM), an EEPROM (Electrically Erasable Programmable ROM), a RAM (Random Access Memory) and the like. Memory 1002 may be called a register, a cache, a main memory (main memory apparatus) or the like. Memory 1002 can store therein executable programs (program codes), software modules and the like for executing the radio communication method according to the embodiment of the present disclosure.

Storage 1003 is a computer readable record medium, and may be configured by at least one of an optical disc such as a CD-ROM (Compact Disc ROM), a hard disc drive, a flexible disc, an optical magnetic disc (for example, a compact disc, a digital versatile disc, a Blu-ray (registered trademark) disc), a smart card, a flash memory (for example, a card, a stick, or a key drive), a floppy (registered trademark) disc, a magnetic strip and the like. Storage 1003 may be called an auxiliary memory apparatus. The memory medium may be, for example, a data base including at least one of memory 1002 and storage 1003, a server and another appropriate medium.

Communication apparatus 1004 is a hardware (transmission/reception device) for communication between computers through at least one of a wired network and a radio network, and, for example, is called a network device, a network controller, a network card, a communication module or the like. Communication apparatus 1004 may be configured to include a high-frequency switch, a duplexer, a filter, and a frequency synthesizer for realizing at least one of, for example, Frequency Division Duplex (FDD) and Time Division Duplex (TDD). For example, antennas and the like of the base station and the terminal may be realized by communication apparatus 1004. A transmission/reception section may be mounted to be physically or logically separated by a transmission section and a reception section.

Input apparatus 1005 is an input device (for example, a keyboard, a mouth, a microphone, a switch, a button, a sensor or the like) receiving input from an outside. Output apparatus 1006 is an output device (for example, a display, a speaker, an LED lamp or the like) performing output to an outside. Input apparatus 1005 and output apparatus 1006 may be configured to be united (for example, a touch panel).

Each of apparatuses such as processor 1001 and memory 1002 is connected by bus 1007 for communication of information. Bus 1007 may be configured using a single bus or may be configured using buses different between apparatuses.

Base station 10 and user terminal 20 may be configured to include hardware such as a microprocessor, a digital signal processor (DSP), an application specific integrated circuit (ASIC), a programmable logic device (PLD), a field programmable gate array (FPGA), and part or all of the respective functional blocks may be realized by the hardware. For example, processor 1001 may be implemented using at least one of the hardware.

### <Notification and Signaling of Information>

Notification of Information is not limited to the aspects and embodiments described in the present disclosure, and may be executed by using other methods. For example, the notification of information may be executed by physical layer signaling (for example, DCI (Downlink Control Information), UCI (Uplink Control Information)), higher layer signaling (for example, RRC (Radio Resource Control) signaling, MAC (Medium Access Control) signaling, broadcast information, (MIB (Master Information Block), SIB (System Information Block)) or other signals, or a combination thereof. The RRC signaling may be called an RRC message, and, for example, may be an RRC connection setup message, an RRC connection reconfiguration message or the like.

### <Application System>

Each of the aspects and embodiments described in the present disclosure may be applied to at least one of LTE (Long Term Evolution), LTE-A (LTE-Advanced), SUPER 3G, IMT-Advanced, 4G (4^{th} generation mobile communication system), 5G (5^{th} generation mobile communication system), FRA (Future Radio Access), NR (New Radio), WCDMA (registered trademark), GSM (registered trademark), CDMA 2000, UMB (Ultra Mobile Broadband), IEEE 802. 11 (Wi-Fi (registered trademark)), IEEE 802. 16 (WiMAX (registered trademark)), IEEE 802. 20, UWB (Ultra-Wideband), Bluetooth (registered trade mark), a system using another appropriate system, and a next generation system expanded based thereupon. In addition, the aspects and embodiment may be applied to a combination of a plurality of systems (for example, a combination of at least one of LTE and LTE-A, and 5G, or the like).

### <Processing Procedure and the like>

The processing procedure, sequence, flow chart and the like of each of the aspects and embodiments described in the present disclosure may be replaced in order unless contradicted. For example, with respect to the method described in the present disclosure, elements of various steps are presented using an exemplary order, and the method is not limited to the presented particular order.

### <Operation of Base Station>

In some cases, the particular operation configured to be performed in the base station in the present disclosure may be performed in the upper node depending upon the condition. In a network composed of one network node or a plurality of network nodes having the base station, various operations performed for communication with the terminal can be apparently performed by at least one of the base station and the other network node (for example, MME, S-GW or the like can be conceived, but not limited thereto). In the above description, a case where the other network node other than the base station is one node is exemplified, but a combination of a plurality of other network nodes (for example, MME and S-GW) may be used.

### <Direction of Input / Output>

Information and the like (* refer to the item " Information, Signal") can be outputted from an upper layer (or a lower layer) to a lower layer (or an upper layer). The information and the like may be inputted and outputted through a plurality of network nodes.

### <Dealing with Information and the like inputted / outputted>

The information and the like inputted / outputted may be stored in a particular place (for example, a memory), and may be managed using a management table. The information and the like to be inputted / outputted can be overwritten, updated or appended. The outputted information and the like may be deleted. The inputted information and the like may be transmitted to the other apparatus.

### <Determination Method>

The determination may be performed by a value (0 or 1) expressed by one bit, may be performed by a true/false value (Boolean: true or false) or may be performed by a comparison of a numerical value (for example, comparison with a predetermined value).

### <Variation of Aspect, and the like>

Each of the aspects and embodiments described in the present disclosure may be used independently, may be used in combination and may be switched in association with execution. The notification of the predetermined information (for example, notification of "being X") is not limited to one being explicitly notified, but may be implicitly executed (for example, by not executing the notification of the predetermined information).

As described above, the present disclosure is in detail described, but it is apparent for those skilled in the art that the present disclosure is not limited to the embodiment described in the present disclosure. The present disclosure can be executed as a modification aspect and a variation aspect without departing from the scope of the present disclosure defined in the description of the appended claims. Accordingly, the description of the present disclosure aims at an exemplary explanation, and does not have any limiting meaning to the present disclosure.

### <Software>

Software should be interpreted to be as broad as to mean a command, a command set, a code, a code segment, a program code, a program, a subprogram, a software module, an application, a software application, a software package, a routine, a subroutine, an object, an executable file, an execution sled, a procedure, a function and the like regardless of whether the software is called software, firmware, middleware, microcode or a hardware description language, or called the other name.

In addition, the software, command, information and the like may be transmitted/received through a transmission medium. For example, in a case where the software is transmitted from a website, a server or the other remote source by using at least one of wired technologies (a coaxial cable, an optical fiber cable, a twist pair, a digital subscriber line (DSL) and the like) and radio technologies (an infrared beam, a microwave and the like), at least one of the wired technologies and the radio technologies is encompassed in the definition of the transmission medium.

### <Information, Signal>

The information, the signal and the like described in the present disclosure may be expressed by using any of various different technologies. For example, data, orders, commands, information, signals, bits, symbols, chips, and the like that can be referred to over the entire description may be expressed by voltages, electrical current, electromagnetic waves, magnetic fields or magnetic particles, optical fields or photons, or any combination thereof.

It should be noted that the terms described in the present disclosure and the terms necessary for the understanding of the present disclosure may be replaced with terms having the same meaning or the meaning similar thereto. For example, at least one of the channel and the symbol may be a signal (may be signaling). The signal may be a message. In addition, the component carrier (CC) may be called a carrier frequency, a cell, a frequency carrier, and the like.

### <"System" and "Network">

The terms of "system" and "network" used in the present disclosure are interchangeably used.

### <Names of Parameter and Channel>

The information, the parameter and the like described in the present disclosure may be expressed by using an absolute value, may be expressed by using an absolute value from a predetermined value, or may be expressed by using different information corresponding thereto. For example, the radio resource may be instructed by the index.

The names used in the parameters are not limited names in any respect. Further, numerical expressions and the like using the parameters may be different from those explicitly disclosed in the present disclosure in some cases. The various channels (for example, PUCCH, PDCCH and the like) and the information elements can be identified by every proper name, and therefore, the various names allotted to the various channels and information elements are not limited names in any respect.

### <Base Station>

In the present disclosure, the terms of "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be interchangeably used. The base station may be called terms of a macro cell, a small cell, a femtocell, a pico cell and the like in some cases.

The base station can accommodate one cell or a plurality (for example, three) of cells. In a case where the base station accommodates the cells, an entire coverage area of the base station can be sectioned into a plurality of smaller areas, and each of the smaller areas can provide communication services by a base station subsystem (for example, a compact base station (RRH "Remote Radio Head") for indoors). The term of "cell" or "sector" indicates part or entirety of at least one coverage area of the base station and the base station subsystem performing the communication service in the coverage.

### <Mobile Station>

In the present disclosure, the terms of "mobile station (MS)", "user terminal", "user equipment (UE)", "terminal" and the like can be interchangeably used.

The mobile station may be called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms by those skilled in the art in some cases.

### <Base Statin/Mobile Station>

At least one of the base station and the mobile station may be called a transmission apparatus, a reception apparatus, a communication apparatus, and the like. It should be noted that at least one of the base station and the mobile station may be a device mounted on a mobile body, a mobile body itself or the like. The mobile body may be a vehicle (for example, a car, an airplane or the like), an unmanned mobile body (for example, drone, automated driving car, or the like), or a robot (manned or unmanned type). At least one of the base station and the mobile station includes an apparatus that does not necessarily move at the communication operation. For example, at least one of the base station and the mobile station may be an I o T (Internet of things) device such as a sensor.

In addition, the base station in the present disclosure may be replaced with the user terminal. For example, in the configuration where the communication between the base station and the user terminal is replaced with the communication between a plurality of user terminals (for example, may be called D2D (Device to Device), V2X (Vehicle-to-Everything) or the like), each of the aspects and embodiments in the present disclosure may be applied. In this case, the function of base station 10 may be made to the configuration of user terminal 20. In addition, terms of "uplink" and "downlink" may be replaced with terms corresponding to terminal-to-terminal communication (for example, "side"). For example, an uplink channel, a downlink channel or the like may be replaced with a side channel.

Likewise, the user terminal in the present disclosure may be replaced with the base station. In this case, the function of user terminal 20 may be regarded as the configuration of base station 10.

### <Meaning and Interpretation of Terms>

The terms of "determining" and "deciding" used in the present disclosure possibly include various operations in some cases. "Determining" or "deciding" can include, for example, that, "judging", "calculating", "computing", "processing", "deriving", "investigating", "looking up, searching or inquiring" (for example, in a table, a data base or in another data structure) or ascertaining is regarded as "determining" or "deciding". In addition, "determining" and "deciding" can include that receiving (for example, receiving information), transmitting (for example, transmitting information), inputting, outputting or accessing (for example, accessing data in the memory) is regarded as "determining" or "deciding". In addition, "determining" and "deciding" can include that resolving, selecting, choosing, establishing, comparing, or the like is regarded as "determining" or "deciding". That is, "determining" and "deciding" can include that any operation is regarded as "determining" or "deciding". In addition, "determining (deciding)" may be replaced with "assuming", "expecting", "considering" or the like.

Terms of "connected" and "coupled" or every modification of the terms mean every direct or indirect connection or coupling between two or more of elements, and can include that one or more of intermediate elements are present between two elements connected or coupled to each other. The coupling or the connection between the elements may be physical, logical or a combination thereof. For example, "connecting" may be replaced with "accessing". In a case of being used in the present disclosure, the two elements can be regarded to be "connected" or "coupled" to each other by using at least one of one or more of electrical wires, a cable and a printed electrical connection, and by using electromagnetic energy having wavelengths in a radio frequency domain, in a microwave domain and in an optical (both of visible and invisible) domain as some non-limiting and non-inclusive examples, and the like.

### <Reference Signal>

The reference signal can also be abbreviated as RS (reference signal), and may be called a pilot according to the applied standard.

### <Meaning of "Based Upon">

The description of "based on" used in the present disclosure does not mean "based only upon" unless otherwise specifically stated. In other words, the description of "based on" means both of "based only upon" and "based at least upon".

### <"First" and "Second">

Also in any reference to elements using designations such as "first" and "second" used in the present disclosure, the amount or the order of the elements is not limited as a whole. The calls can be used in the present disclosure as a convenient method making distinction between two or more of elements. Accordingly, the reference to the first and second elements does not mean that only two elements are adopted or that the first element must be prior to the second element in any form.

### <"Means">

"Means" in the configuration of each of the apparatuses may be replaced with "section", "circuit", "device" or the like.

### <Open Form>

In the present disclosure, in a case where "include", "including" and the modified forms are used, these terms are intended to be inclusive just as the term of "comprising". Further, the term of "or" used in the present disclosure is intended not to be "exclusive-OR".

### <Time Unit of TTI and the like, Frequency Unit of RB and the like and Radio Frame Configuration >

The radio frame may be configured by one frame or a plurality of frames in a time domain. One frame or each of a plurality of frames may be called a subframe in a time domain.

The subframe may be further configured by one slot or a plurality of slots in a time domain. The subframe may be a fixed time length (for example, 1 ms) that does not depend upon numerology.

The numerology may be a communication parameter applicable to at least one of transmission and reception of some signal or channel. The numerology may indicate at least one of, for example, subcarrier spacing (SCS), a bandwidth, a symbol length, a cyclic prefix length, a transmission time interval (TTI), the symbol number per TTI, a radio frame configuration, specific filtering processing executed in a frequency domain by the transmission/reception device, specific windowing processing executed in a time domain by the transmission/reception device, and the like.

The slot may be configured by one symbol or a plurality of symbols (OFDM (Orthogonal Frequency Division Multiplexing) symbol, SC-FDMA (Single Carrier Frequency Division Multiple Access) symbol and the like) in a time domain. The slot may indicate a time unit based on numerology.

The slot may include a plurality of mini-slots. Each of the mini-slots may be configured by one symbol or a plurality of symbols in a time domain. In addition, the mini-slot may be called a sub-slot. The mini-slot may be configured by the smaller number of the symbols than the slot. PDSCH (or PUSCH) transmitted in a time unit larger than the mini-slot may be called a PDSCH (or PUSCH) mapping type A. PDSCH (or PUSCH) transmitted using the mini-slot may be called a PDSCH (or PUSCH) mapping type B.

The radio frame, the subframe, the slot, the mini-slot and the symbol each represent a time unit at the time of transmitting signals. The radio frame, the subframe, the slot, the mini-slot and the symbol each may have a different call corresponding to each.

For example, one subframe may be called a transmission time interval (TTI), and a plurality of successive subframes may be called TTI, and one slot or one mini-slot may be called TTI. That is, at least one of the subframe and TTI may be a subframe (1 ms) in the existing LTE, may have a period (for example, 1 to 13 symbols) shorter than 1 ms or may have a period longer than 1 ms. It should be noted that a unit representing TTI may be called not the subframe, but the slot, the mini-slot or the like.

Here, TTI means, for example, the minimum time unit of scheduling in the radio communication. For example, in the LTE system, the base station performs scheduling of allotting the radio resource (frequency bandwidth and transmission power that can be used in each user terminal) to each user terminal in a TTI unit. It should be noted that the definition of TTI is not limited thereto.

The TTI may be a transmission time unit such as a data packet (transport block), a code block and a codeword, subjected to channel coding or a processing unit such as scheduling and link adaptation. When the TTI is given, a time division (for example, the symbol number) by which the transport block, the code block, the codeword and the like are actually mapped may be shorter than the TTI.

In a case where one slot or one mini-slot is called the TTI, one or more of the TTIs (that is, one or more of the slots or the mini-slots) may be a minimum time unit of the scheduling. In addition, the slot number (mini-slot number) configuring the minimum time unit of the scheduling may be controlled.

The TTI having a time length of 1 ms may be called a regular TTI (TTI in LTE Rel. 8-12), a normal TTI, a long TTI, a regular subframe, a normal subframe, a long subframe, a slot, and the like. The TTI shorter than the regular TTI may be called a shortened TTI, a short TTI, a partial TTI (partial or fractional TTI), a shortened subframe, a short subframe, a mini-slot, a sub-slot, a slot, and the like.

It should be noted that the long TTI (for example, the regular TTI, the subframe, or the like) may be replaced with a TTI having a time length exceeding 1 ms, and the short TTI (for example, the shortened TTI or the like) may be replaced with a TTI having a TTI length of less than the TTI length of the long TTI and equal to or more than 1 ms.

A resource block (RB) is a resource allocation unit in the time domain and the frequency domain, and the resource block may include one subcarrier or a plurality of continuous subcarriers in the frequency domain. The number of the subcarriers included in the RB may be the same number regardless of the numerology, such as 12. The number of the subcarriers included in the RB may be determined based on the numerology.

In addition, the time domain of the RB may include one symbol or a plurality of symbols, and may have a length of one slot, one mini-slot, one subframe, or one TTI. One TTI, one subframe and the like each may be constituted by one resource block or a plurality of resource blocks.

It should be noted that one RB or a plurality of RBs may be called a physical resource block (PRB: Physical RB), a subcarrier group (SCG), a resource element group (REG), a PRB pair, an RB pair, and the like.

The resource block may be constituted by one resource element or a plurality of resource elements (RE: Resource Element). For example, one RE may be a radio resource domain of one subcarrier and one symbol.

A bandwidth part (BWP: Bandwidth Part) (may be called a partial bandwidth or the like) may indicate a subset of continuous common RBs (common resource blocks) for numerology in some carrier. Here, the common RB may be specified by an index of the RB as a reference of a common reference point of the carrier. The PRB may be defined by some BWP and may be numbered in the BWP.

The BWP may encompass a BWP for UL (UL BWP) and a BWP for DL (DL BWP). To the UE, one BWP or a plurality of BWPs may be configured in one carrier.

At least one of the configured BWPs may be active, and the UE may not assume to transmit/receive a predetermined signal/channel outside of the active BWP. It should be noted that "cell", "carrier" and the like in the present disclosure may be replaced with "BWP".

Each structure of the radio frame, the subframe, the slot, the mini-slot, the symbol and the like is illustrative only. For example, each configuration of the number of subframes included in the radio frame, the number of slots per the subframe or the radio frame, the number of mini-slots included in the slot, the numbers of symbols and RBs included in the slot or the mini-slot, the number of subcarriers included in the RB, the number of symbols in the TTI, a symbol length, a cyclic prefix (CP) length, and the like can be changed in various ways.

### <Maximum Transmission Power>

"Maximum transmission power" in the description of the present disclosure may mean a maximum value of transmission power, may mean nominal UE maximum transmission power, and rated UE maximum transmission power.

### <Article>

When articles, such as "a," "an," and "the" in English, are added by translation in the present disclosure, the noun following the articles may include plural forms in the present disclosure.

### <Differ>

In the present disclosure, the sentence of "A and B differ" may mean a sentence of "A and B differ from each other". The sentence also may mean a sentence of "A and B each differ from C". Terms of "separated", "coupled" and the like also may be interpreted as similar to "differ".

### Industrial Applicability

An aspect of the present disclosure is useful for a radio communication system.

### Reference Signs List

10, 10A, 10B, 10C IAB node
20 User Terminal
100 Control Section
102 Storage Section
103 For-UE Radio Communication Section
104 For-BH Radio Communication Section

## Claims

1. A radio node (10), comprising:
a reception section configured to periodically receive a plurality of signals including at least one of synchronization information and broadcast channel information; and
a control section (100) configured to determine whether to assume Quasi co-location, QCL, between a first signal among the plurality of signals received in a first period and a second signal among the plurality of signals received in a second period based on at least one of the synchronization information and the broadcast channel information, wherein
the first signal and the second signal have a same index depending upon a time position in each of the first period and the second period, wherein
the control section (100) is configured to determine not to assume the QCL between the first signal and the second signal in a case where the at least one of the synchronization information and the broadcast channel information indicates that the plurality of signals, the number of which is larger than a predetermined number, are arranged in each of the first period and the second period.

2. The radio node (10) according to claim 1, wherein the control section (100) is configured to determine not to assume the QCL between the first signal and the second signal in a case where the at least one of the synchronization information and the broadcast channel information indicates that a measurement period of the plurality of signals is longer than a predetermined period.

3. The radio node (10) according to claim 1, wherein a transmission periodicity of the plurality of signals that includes the first period and the second period is longer than a transmission periodicity in a frequency band in which a user terminal (20) searches for the plurality of signals.

4. The radio node (10) according to claim 1, wherein a measurement bandwidth using the plurality of signals is broader than a bandwidth in a frequency band in which a user terminal (20) searches for the plurality of signals.

5. A radio communication method, comprising:
periodically receiving, by a radio node (10), a plurality of signals including at least one of synchronization information and broadcast channel information; and
determining, by the radio node (10), whether to assume Quasi co-location, QCL, between a first signal among the plurality of signals received in a first period and a second signal among the plurality of signals received in a second period based on at least one of the synchronization information and the broadcast channel information, wherein
the first signal and the second signal have a same index depending upon a time position in each of the first period and the second period, wherein
determining, by the radio node (10), whether to not assume the QCL between the first signal and the second signal in a case where the at least one of the synchronization information and the broadcast channel information indicates that the plurality of signals, the number of which is larger than a predetermined number, are arranged in each the first period and the second period.

## Patentansprüche

1. Funkknoten (10), umfassend:
einen Empfangsabschnitt, der so konfiguriert ist, dass er regelmäßig eine Vielzahl von Signalen empfängt, die mindestens eines einschließen von Synchronisationsinformationen und Rundfunkkanalinformationen; und
einen Steuerabschnitt (100), der so konfiguriert ist, dass er bestimmt, ob zwischen einem ersten Signal unter der Vielzahl von Signalen, die in einem ersten Zeitraum empfangen wurden, und einem zweiten Signal unter der Vielzahl von Signalen, die in einem zweiten Zeitraum empfangen wurden, basierend auf mindestens einem der Synchronisationsinformationen und der Rundfunkkanalinformationen Quasi-Kolokation, QCL, angenommen werden soll, wobei
das erste Signal und das zweite Signal einen gleichen Index aufweisen, der von einer Zeitposition in jedem des ersten Zeitraums und des zweiten Zeitraums abhängt, wobei
der Steuerabschnitt (100) so konfiguriert ist, dass er bestimmt, dass die QCL zwischen dem ersten Signal und dem zweiten Signal nicht angenommen werden soll, wenn das mindestens eine der Synchronisationsinformationen und der Rundfunkkanalinformationen angibt, dass die Vielzahl von Signalen, deren Anzahl größer ist als eine vorbestimmte Anzahl, in jedem des ersten Zeitraums und des zweiten Zeitraum angeordnet ist.

2. Funkknoten (10) nach Anspruch 1, wobei der Steuerabschnitt (100) so konfiguriert ist, dass er bestimmt, dass die QCL zwischen dem ersten Signal und dem zweiten Signal nicht angenommen werden soll, wenn das mindestens eine der Synchronisationsinformationen und Rundfunkkanalinformationen angibt, dass ein Messzeitraum der Vielzahl von Signalen länger ist als ein vorbestimmter Zeitraum.

3. Funkknoten (10) nach Anspruch 1, wobei eine Übertragungsperiodizität der Vielzahl von Signalen, die den ersten Zeitraum und den zweiten Zeitraum einschließt, länger ist als eine Übertragungsperiodizität in einem Frequenzband, in dem ein Benutzerendgerät (20) nach der Vielzahl von Signalen sucht.

4. Funkknoten (10) nach Anspruch 1, wobei eine Messbandbreite, die die Vielzahl von Signalen benutz, breiter ist als eine Bandbreite in einem Frequenzband, in dem ein Benutzerendgerät (20) nach der Vielzahl von Signalen sucht.

5. Funkkommunikationsverfahren, umfassend:
regelmäßiges Empfangen durch einen Funkknoten (10) einer Vielzahl von Signalen, die mindestens eines von Synchronisationsinformationen und Rundfunkkanalinformationen einschließen; und
Bestimmen durch den Funkknoten (10), ob zwischen einem ersten Signal unter der Vielzahl von Signalen, die in einem ersten Zeitraum empfangen wurden, und einem zweiten Signal unter der Vielzahl von Signalen, die in einem zweiten Zeitraum empfangen wurden, basierend auf mindestens einem der Synchronisationsinformationen und der Rundfunkkanalinformationen Quasi-Kolokation, QCL, angenommen werden soll, wobei
das erste Signal und das zweite Signal einen gleichen Index aufweisen, der von einer Zeitposition in jedem des ersten Zeitraums und des zweiten Zeitraums abhängt, wobei
Bestimmen durch den Funkknoten (10), dass die QCL zwischen dem ersten Signal und dem zweiten Signal nicht angenommen werden soll, wenn das mindestens eine der Synchronisationsinformationen und der Rundfunkkanalinformationen angibt, dass die Vielzahl von Signalen, deren Anzahl größer ist als eine vorbestimmte Anzahl, in jedem des ersten Zeitraums und des zweiten Zeitraum angeordnet ist.

## Revendications

1. Nœud radio (10), comprenant :
une unité de réception configurée pour recevoir périodiquement une pluralité de signaux incluant au moins l'un parmi des informations de synchronisation et des informations de canal de diffusion ; et
une unité de commande (100) configurée pour déterminer s'il faut supposer une quasi-co-localisation, QCL, entre un premier signal parmi la pluralité de signaux reçus au cours d'une première période et un second signal parmi la pluralité de signaux reçus au cours d'une seconde période, sur la base d'au moins l'un parmi les informations de synchronisation et les informations de canal de diffusion, dans lequel
le premier signal et le second signal présentent un même indice en fonction d'une position temporelle dans chacune de la première période et de la seconde période, dans lequel
l'unité de commande (100) est configurée pour déterminer de ne pas supposer la QCL entre le premier signal et le second signal dans le cas où l'au moins un parmi les informations de synchronisation et les informations de canal de diffusion indique que la pluralité de signaux, dont le nombre est supérieur à un nombre prédéterminé, est agencée dans chacune de la première période et de la seconde période.

2. Nœud radio (10) selon la revendication 1, dans lequel l'unité de commande (100) est configurée pour déterminer de ne pas supposer la QCL entre le premier signal et le second signal dans le cas où l'au moins un parmi les informations de synchronisation et les informations de canal de diffusion indique qu'une période de mesure de la pluralité de signaux est plus longue qu'une période prédéterminée.

3. Nœud radio (10) selon la revendication 1, dans lequel une périodicité de transmission de la pluralité de signaux qui inclut la première période et la seconde période est plus longue qu'une périodicité de transmission dans une bande de fréquence dans laquelle un terminal d'utilisateur (20) recherche la pluralité de signaux.

4. Nœud radio (10) selon la revendication 1, dans lequel une largeur de bande de mesure utilisant la pluralité de signaux est plus large qu'une largeur de bande dans une bande de fréquence dans laquelle un terminal d'utilisateur (20) recherche la pluralité de signaux.

5. Procédé de radiocommunication, comprenant :
la réception périodique, par un nœud radio (10), d'une pluralité de signaux incluant au moins l'un parmi des informations de synchronisation et des informations de canal de diffusion ; et
le fait de déterminer, par le nœud radio (10), s'il faut supposer une quasi-co-localisation, QCL, entre un premier signal parmi la pluralité de signaux reçus au cours d'une première période et un second signal parmi la pluralité de signaux reçus au cours d'une seconde période, sur la base d'au moins l'un parmi les informations de synchronisation et les informations de canal de diffusion, dans lequel
le premier signal et le second signal présentent un même indice dépendant d'une position temporelle dans chacune de la première période et de la seconde période, dans lequel
le fait de déterminer, par le nœud radio (10), s'il convient de ne pas supposer la QCL entre le premier signal et le second signal dans le cas où l'au moins un parmi les informations de synchronisation et les informations de canal de diffusion indique que la pluralité de signaux, dont le nombre est supérieur à un nombre prédéterminé, est agencée dans chacune de la première période et de la seconde période.
